# EUROPEAN PATENT SPECIFICATION

(11) **EP 2 835 933 B1**
(45) Date of publication and mention of the grant of the patent: **11.07.2018**
(21) Application number: 13797422.6
(22) Date of filing: 17.05.2013
(51) Int. Cl.: H04L 9/32, H04L 9/08, H04L 9/14, H04L 29/06, H04N 21/235, H04N 21/435, H04N 21/61, H04N 21/845

(54) **METHOD, DEVICE AND SYSTEM FOR IMPLEMENTING MEDIA DATA PROCESSING**
VERFAHREN, VORRICHTUNG UND SYSTEM ZUR IMPLEMENTIERUNG VON MEDIENDATENVERARBEITUNG
PROCÉDÉ, DISPOSITIF ET SYSTÈME POUR LA MISE EN OEUVRE D'UN TRAITEMENT DE DONNÉES MULTIMÉDIAS

(30) Priority: 29.05.2012 CN 201210171388
(43) Date of publication of application: 11.02.2015
(73) Proprietor: Huawei Technologies Co., Ltd., Longgang District Shenzhen, Guangdong 518129 (CN)
(72) Inventor: ZHANG, Shaobo, Shenzhen Guangdong 518129 (CN)
(74) Representative: Pfenning, Meinig & Partner mbB
(86) International application number: PCT/CN2013/075779
(87) International publication number: WO 2013/178019

(56) References cited:
- EP-A1- 2 023 527
- EP-A1- 2 309 744
- CN-A- 101 247 506
- US-A1- 2004 177 369
- US-A1- 2011 069 834
- US-A1- 2011 145 560
- US-B1- 7 320 069

## Description

### TECHNICAL FIELD

The present invention relates to the field of data transmission technologies, and in particular, to a method, an apparatus, and a system for implementing media data processing.

### BACKGROUND

Currently, with development of computer and network technologies, in a media service such as streaming media, video data, audio data, another multimedia data, or the like usually needs to be transmitted by using a network. In view of security, only a user who is authorized or obtains a key can view and use media data, and an unauthorized user cannot normally view or use the media data; therefore, in general, media data is transmitted in an encrypted form, and at the same time, a key is transferred to an authorized user through a secure channel.

However, in a media service, a protection object is media data, and protection for the media data and that for text data are completely different. For the text data, there is a tight context association, and if any part is unprotected, it is likely to cause content leaking, or provide a clue for decryption, thereby threatening content security; therefore, it is required to perform overall encryption to satisfy a security requirement. For the media data such as video data or audio data, in general, an information capacity is relatively large, and if overall encryption is performed, security can also be ensured; however, during data encryption and decryption, a large amount of computation is required, a large number of resources are consumed, and relatively high requirements are imposed on computing power, a power supply, and the like, which is especially important to a handheld device, such as a mobile phone or a tablet computer. Therefore, how to effectively reduce resource consumption in a process of processing media data encryption and decryption is a key issue that needs to be addressed in a current media service.

EP2309744A1 discloses partially encrypting media files. The encryption serves to cryptographically secure only a portion of the media data within a media file, while the remaining portion of the media data is not cryptographically secured. Although only partial encryption is used, the portion being encrypted serves to substantially disrupt usefulness of other parts of the media file which are not encrypted.

US2011145560A1 discloses that an adaptive security policy based scalable video service apparatus includes a video streaming server, an adaptive security policy server and a terminal. The video streaming server receives a service demand via a network and generates an encrypted streaming data. The adaptive security policy server analyzes a media structure and the service demand, by using a service profile received from the video streaming server, so as to generate a security policy description.

US7320069B1 discloses selectively encrypting portions of media data that are streamed over a network. Media data is identified and a portion of the data is selectively encrypted. The media data is then streamed over a network to one or more recipients for consumption. The intended recipients cannot consume the media data until the encrypted portion is properly decrypted.

US2004177369A1 discloses a Personal Video Recorder (PVR) in a subscriber television network receives service instances from a headend of the subscriber television network. The PVR is adapted to provide conditional access to recorded service instances.

CN101247506A1 discloses a method for encrypting the file in the digital medium playing system and the encrypted file structure thereof.

### SUMMARY

Embodiments of the present invention provide a method, an apparatus, and a system for implementing media data processing, which can effectively reduce a system resource overhead on a premise that media data security is ensured.

To resolve the foregoing problem, the embodiments of the present invention provide the following technical solutions:
According to one aspect, a method for implementing media data processing is provided in the present invention, including:
   dividing media data into several data blocks; selecting a part of the several data blocks by using a preset rule; encrypting the selected part of the several data blocks; when a data acquiring request from a requester is received, sending requested data to the requester, where the requested data includes: the encrypted part of the several data blocks, or an unencrypted data block in the several data blocks, or the unencrypted data block in the several data blocks and the encrypted part of the several data blocks; and sharing the preset rule with the requester, so that the requester can determine the encrypted part of the several data blocks according to the preset rule; when the preset rule at least comprises a random number generation algorithm, the selecting a part of the several data blocks by using a preset rule comprises: generating a random variable sequence according to the random number generation algorithm, wherein the random variable sequence comprises a first variable that represents a first state and a second variable that represents a second state; and the first variable and the second variable in the random variable sequence are associated with the several data blocks, wherein each data block in the several data blocks is corresponding to only one first variable or second variable in the random variable sequence, and the first variable and the second variable are used to distinguish whether the data block needs to be encrypted.
According to another aspect, a method for implementing media data processing is provided in the present invention, including:
   receiving media data processed by an encryption device; determining an encrypted data block in the media data by using a preset rule shared with the encryption device; and performing decryption processing on the encrypted data block to obtain original media data; when the preset rule at least comprises a random number generation algorithm, the determining an encrypted data block in the media data by using the preset rule comprises: generating a random variable sequence according to the random number generation algorithm, wherein the random variable sequence comprises a first variable that represents a first state and a second variable that represents a second state; and the first variable and the second variable in the random variable sequence are associated with the several data blocks, wherein each data block in the several data blocks is corresponding to only one first variable or second variable in the random variable sequence, and the first variable and the second variable are used to distinguish whether the data block is an encrypted data block.
According to another aspect, an apparatus for implementing media data processing is provided in the present invention. The apparatus includes: a dividing unit, a selecting unit, an encrypting unit, and a sending unit, where the dividing unit is configured to divide media data into several data blocks; the selecting unit is configured to select, by using a preset rule, a part of the several data blocks obtained through dividing by the dividing unit; the encrypting unit is configured to encrypt the part of the several data blocks selected by the selecting unit; and the sending unit is configured to, when a data acquiring request from a requester is received, send the encrypted part of the several data blocks and an unencrypted data block in the several data blocks to the requester, so that the requester can determine the encrypted part of the several data blocks according to the preset rule, where the selecting unit and the requester share the preset rule; wherein the selecting unit further comprises: a first random number generator, a first matching module, and a first processing module; wherein: the first random number generator is configured to generate a random variable sequence according to a random number generation algorithm comprised in the preset rule, wherein the random variable sequence comprises a first variable that represents a first state and a second variable that represents a second state; the first matching module is configured to associate the first variable and the second variable in the random variable sequence with the several data blocks, wherein each data block in the several data blocks is corresponding to only one first variable or second variable in the random variable sequence; and the first processing module is configured to: determine, according to a variable corresponding to the data block, whether the data block needs to be encrypted, and notify the encrypting unit.
According to another aspect, an apparatus for implementing media data processing is provided in the present invention, including: a receiving unit, a distinguishing unit, and a decrypting unit, where the receiving unit is configured to receive media data processed by an encryption device; the distinguishing unit is configured to determine, by using a preset rule shared with the encryption device, an encrypted data block in the media data received by the receiving unit; and the decrypting unit is configured to perform a decryption operation on the encrypted data block determined by the distinguishing unit; wherein the distinguishing unit further comprises: a second random number generator, a second matching module, and a second processing module, wherein: the second random number generator is configured to generate a random variable sequence according to a random number generation algorithm comprised in the preset rule, wherein the random variable sequence comprises a first variable that represents a first state and a second variable that represents a second state; the second matching module is configured to associate the first variable and the second variable in the random variable sequence with the several data blocks, wherein each data block in the several data blocks is corresponding to only one first variable or second variable in the random variable sequence; and the second processing module is configured to: determine, according to a variable corresponding to the data block, whether the data block is an encrypted data block, and instruct the decrypting unit to perform the decryption operation.
According to another aspect, a system for implementing media data processing is provided in the present invention, including: a first processing device and a second processing device, where the first processing device is configured to: divide media data into several data blocks, select, by using a preset rule shared with the second processing device, a part of the several data blocks, and encrypt the selected part of the several data blocks; and the second processing device is configured to: receive media data processed by an encryption device, and after an encrypted data block in the media data is determined by using the preset rule shared with the first processing device, perform decryption processing on the encrypted data block to obtain original media data; when the preset rule at least comprises a random number generation algorithm, the first processing device is further configured to generate a random variable sequence according to a random number generation algorithm comprised in the preset rule, wherein the random variable sequence comprises a first variable that represents a first state and a second variable that represents a second state; associate the first variable and the second variable in the random variable sequence with the several data blocks, wherein each data block in the several data blocks is corresponding to only one first variable or second variable in the random variable sequence; and determine, according to a variable corresponding to the data block, whether the data block needs to be encrypted, and notify the first processing device.

It may be learned that, by using a method, an apparatus, and a system in embodiments of the present invention, partial encryption is performed on media data, so that transmitted data combines encrypted data and unencrypted data, and a requester decrypts only an encrypted part of the several data, thereby effectively reducing a system resource overhead in a case in which media data security is ensured.

### BRIEF DESCRIPTION OF DRAWINGS

To describe the technical solutions in the embodiments of the present invention or in the prior art more clearly, the following briefly introduces the accompanying drawings required for describing the embodiments.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for implementing media data processing according to an embodiment of the present invention;
FIG. 2 is another schematic flowchart of a method for implementing media data processing according to an embodiment of the present invention;
FIG. 3 is still another schematic flowchart of a method for implementing media data processing according to an embodiment of the present invention;
FIG. 4 is a schematic structural diagram of an apparatus for implementing media data processing according to an embodiment of the present invention; and
FIG. 5 is another schematic structural diagram of an apparatus for implementing media data processing according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It is known that for text data, if partial encryption is used, leaking of a part of text message is caused, and further, an encryption clue of an encrypted part of texts may be obtained from an unencrypted plain text according to a context, so as to decrypt a text message. For a complex media type, it is much more difficult to speculate another part according to a part of media data, and speculation is of no significance to consumers of media content; in addition, a predicative coding technology is widely used in modern video and audio coding, a dependence relationship exists between data and previous data in media data, and unencrypted data is likely to depend on encrypted data; therefore, the unencrypted data is not necessarily useful for an unauthorized user, either. On a basis of this, a basic idea of the present application lies in that partial encryption is performed on media data, so that transmitted data combines encrypted data and unencrypted data, and a requester decrypts only an encrypted part of the several data, thereby effectively reducing a system resource overhead in a case in which media data security is ensured.

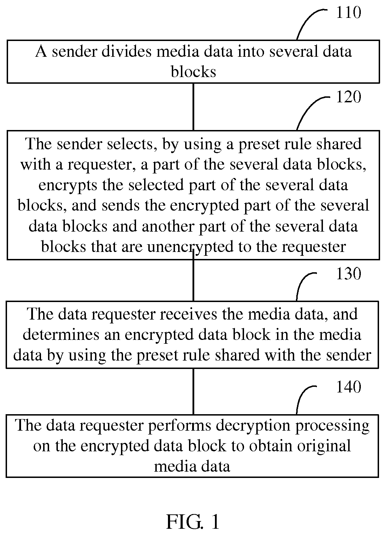

Embodiment 1 of the prevent invention provides a method for implementing media data processing. As shown in FIG. 1, the method includes:
Step 110: A sender divides media data into several data blocks.

Specifically, in this embodiment, a data block generated by dividing the media data by the sender may be of a fixed length, and may also be of an unfixed length. Certainly, a person of ordinary skill in the art easily understands that, for division of the media data, another manner in the prior art may be used. This embodiment sets no specific limitation thereto, and details are not described herein again.

Step 120: The sender selects, by using a preset rule shared with a requester, a part of the several data blocks, encrypts the selected part of the several data blocks, and sends the encrypted part of the several data blocks and another part of the several data blocks that are unencrypted to the requester.

In this embodiment, the preset rule used by the sender needs to be the same as the preset rule which is mentioned in the following step and used by the requester. For the sender and the requester, the preset rule is the same; therefore, similar to a key, the preset rule may be used as a secret shared by both receiving and sending parties. In addition, both receiving and sending parities may share the preset rule in the following manners which are not limited hereto: The preset rule is sent to the requester through a secure channel, or the requester is notified of the preset rule in a public manner, or a same rule as that of the requester is preset, or the preset rule is negotiated and determined by exchanging information with the requester, or the like. Details are not described again in this specification. For the requester, a decryption device is used as an example for description in the following. In addition, it should be noted that in this embodiment, a quantity of the selected part of the several data blocks must be less than a total quantity of the several data blocks, so that partial encryption can be implemented.

It should be noted that in this embodiment, the preset rule may be used in the following manners to complete a selection operation, but manners are not limited to the following manners:
A. In this embodiment, a random number generator may be used to complete the selection operation; in this case, the preset rule needs to at least include a random number generation algorithm, and certainly, may further include a parameter such as a random number generating initial value. Specifically, a 0-1 random number generator is used, an input parameter is a seed of the random number generator and an occurrence probability p of 1 or an occurrence probability q of 0, where p+q=1. The random number generator is run, and a 0-1 sequence with a length of N is generated, where each digit in the sequence is corresponding to one data block. 0 indicates that the data block does not need to be encrypted, and 1 indicates that the data block needs to be encrypted. Certainly, a person of ordinary skill in the art easily understands that there are various different methods for implementing the random number generator. For a well-known method, details are not described herein again. It should be noted that in this embodiment, 0 and 1 in the 0-1 sequence are merely two opposite identifiers that may be distinguished, and either of them may be used to indicate that a corresponding data block should be encrypted or unencrypted; in addition, 0 and 1 are merely two state examples in this embodiment, and this embodiment sets no specific limitation thereto.
B. In this embodiment, when the preset rule includes multiple selection algorithms and algorithm identifiers of the multiple selection algorithms, it is required to first determine a specific algorithm for performing data block selection. For example, when the preset rule includes three selection algorithms, which are respectively as follows: An identifier x represents that an even number is selected, an identifier y represents that an odd number is selected, and an identifier z represents that selection is performed at an interval of two data blocks, starting from the first data block. On a basis of the preset rule, first it is determined by using the identifier x that a selection algorithm used this time is selecting an even number, and then all even data blocks are extracted from the media data, so as to perform a subsequent encryption operation. It should be noted that this embodiment sets no specific limitation on a to-be-used algorithm identifier, but in a process of an encryption and decryption operation, both parties need to use a same algorithm identifier to determine a selection algorithm, and then perform an encryption operation or determine an encrypted data block. Details are not described again in this embodiment.

On a basis of the above, if the preset rule is unknown, encrypted data blocks cannot be learned. Specifically, if content included in the preset rule is unknown, data restoration cannot be correctly performed, either; therefore, in addition to encryption, media data security may be further enhanced.

Step 130: The requester receives the media data, and determines an encrypted data block in the media data by using the preset rule shared with the sender.

Specifically, in this embodiment, the media data received by the requester includes a part of encrypted data blocks and another unencrypted data block, and then the requester selects the encrypted data block by using the preset rule shared with the sender, where the preset rule used by the requester to share with the sender includes but is not limited to the following: The preset rule sent by the sender is received through a secure channel, or the preset rule notified by the sender is acquired in a public manner, or the preset rule which is the same as that of the sender is preset, or the preset rule is negotiated and determined by exchanging information with the sender. Details are not described again in this specification.

It should be noted that the requester may learn, in the foregoing multiple manners, the preset rule shared with the sender; therefore, when the random number generator is used to implement the selection operation, the requester may determine the encrypted data block as long as the requester learns parameters, such as a random number generator algorithm, an initial value, the occurrence probability p of 1, and an initial number of a data block that are in the preset rule. A specific determining process is similar to that of the sender, and details are not described herein again in this embodiment.

Step 140: The requester performs decryption processing on the encrypted data block to obtain original media data.

In this embodiment, the media data received by the requester includes the part of encrypted data blocks; therefore, if it is required to learn the original media data, the encrypted data blocks need to be determined, and the original media data can be acquired only after the encrypted data blocks are decrypted. It should be noted that in this embodiment, the encryption and decryption operation may be implemented by using standards, for example, a data encryption standard (DES: Data Encryption Standard) or an advanced encryption standard (AES: Advanced Encryption Standard) issued by National Institute of Standards and Technology (NITS). However, this embodiment sets no limitation on an encryption and decryption method, and the encryption and decryption method does not fall within the scope of the present invention. In another aspect, the method in the present invention is applied to media data transmission. The method is independent of content and includes a content expression (that is, media coding or source coding), and may be applicable to different media coding.

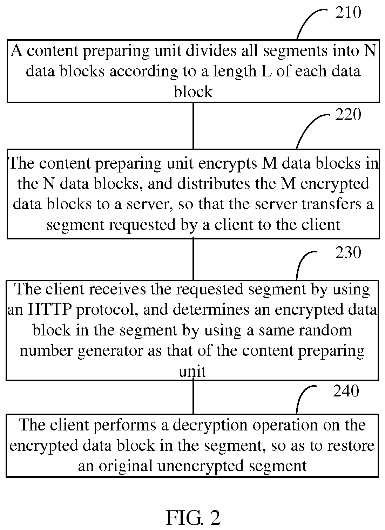

The following uses a specific example to describe in detail the method for implementing media data processing in the foregoing embodiment. As shown in FIG. 2, in Embodiment 2 of the present invention, an application of the present invention in HTTP Streaming (HTTP streaming) is used as an example: In an HTTP Streaming service, a coding version of media content is referred to as a coding expression, the coding expression is divided into several media segments (Media Segment) in a time domain, and a URL (Uniform Resource Locator, uniform resource locator) is allocated to each segment, where each coding expression has an initialized segment, and the initialized segment only includes metadata of media coding, but excludes coding data of media content; a coding expression includes one initialized segment and several (at least one) media segments, and both the initialized segment and the media segment are collectively referred to as segments.

S210. A content preparing unit divides a segment (which includes a media segment and an initialized segment) in HTTP Streaming into N data blocks according to a length L of each data block, where a length of the last data block may be less than L, and lengths of other data blocks are the same.

S220. The content preparing unit encrypts M data blocks in the N data blocks, and distributes the M encrypted data blocks to a server that supports an HTTP protocol; after receiving a request from a client, the server transfers a segment requested by the client to the client.

To enable a requester to successfully complete a decryption operation, a length L of a data block or a quantity N of encrypted data blocks is transferred as a parameter to the requester. Specifically, in this embodiment, the content preparing unit randomly generates a 0-1 sequence by using a random number generator, where a total quantity of 0 and 1 in the 0-1 sequence is N, a quantity of 1 is M, and an ith data block is corresponding to an ith digit in the sequence. If a figure corresponding to the ith data block is 1, it indicates that encryption processing needs to be performed on the ith data block, and then the content preparing unit performs an encryption operation on the data block, and performs encryption operations on a total of M data blocks.

For an HTTP Streaming application, information, which is described in the present invention, about the media data division and a preset rule may be included in a media presentation description file (MPD, Media Presentation Description). Before performing content distribution, the content preparing unit generates the media presentation description file (MPD, Media Presentation Description), where information about a division method, a preset rule, and the like that are used by the content preparing unit is described, and the client acquires the media presentation description file before requesting a segment, thereby ensuring that a division method and a preset rule, which are used by the client, of the media data are in complete conformity with those used by the content preparing unit. As an example, several XML (extensible markup language, Extensible Markup Language) data units and properties are defined in MPD. Refer to the following table:

| **Data unit or property** | **Usage** | **Description** |
|---|---|---|
| **ContentProtection** | | |
| @schemeIdUri | Required | Describes a universal resource identifier (URI: Universal Resource Identifier) to identify a content protection solution used. |
| | | Indicates inter-segment encryption if equal to "inter-segment encryption". |
| | | Indicates intra-segment encryption if equal to "intra-segment encryption". |
| @blockSize | Optional | Describes a length, which is indicated by byte, of a data block. |
| | | The property is present only when the property @scheme is "intra-segment encryption". |
| | | If @scheme is other value than "intra-segment encryption", it shall not be present. |
| @ selectionAlgorithmId | Required | Describes a selection algorithm |
| @seed | Optional | The property is present only when an algorithm indicated by @selectionAlgorithmId is a random number generation algorithm. |
| | | It is used to initialize a random number generator, and determine an initial state of the random number generator. |
| @p1 | Optional | The property is present only when an algorithm indicated by @selectionAlgorithmId is a random number generation algorithm. |
| | | It describes a probability that 1 is generated by the random number generation algorithm. |
| A data unit is indicated by a bold character, and a property is identified by a prefix @. | | |

Apparently, different data structures may be defined in MPD to describe the information about the division method, the preset rule, and the like that are used by the content preparing unit.

S230. The client receives a requested segment by using the HTTP protocol, and determines an encrypted data block in the segment by using a random number generator algorithm and an initial value that are the same as those of the content preparing unit, where a specific determining process of the encrypted data block is the same as that of the foregoing content preparing unit, and details are not described herein again.

S240. The client performs a decryption operation on the encrypted data block in the segment, so as to restore an original unencrypted segment.

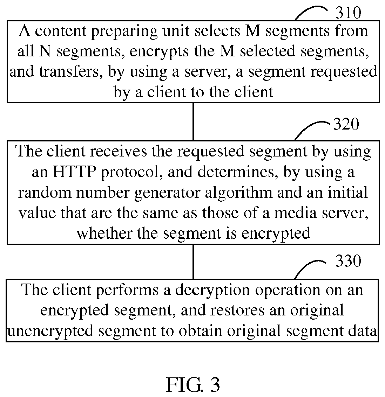

The following uses a specific example to describe in detail the method for implementing media data processing in the foregoing embodiment. As shown in FIG. 3, in Embodiment 3 of the present invention, an application of the present invention in HTTP Streaming is still used as an example:
S310. A content preparing unit selects M segments from N segments in the HTTP Streaming, encrypts the M selected segments, and distributes the M encrypted segments to a server that supports an HTTP protocol; after receiving a request from a client, the server transfers, by using the HTTP protocol, a segment requested by the client to the client.

Similarly, in this embodiment, the content preparing unit randomly generates a 0-1 sequence by using a random number generator, where a total quantity of 0 and 1 in the 0-1 sequence is N, a quantity of 1 is M, and an i^{th} segment is corresponding to an i^{th} digit in the sequence. If a figure corresponding to the i^{th} segment is 1, it indicates that encryption processing needs to be performed on the i^{th} segment, and then the content preparing unit performs an encryption operation on the segment, and performs encryption operations on a total of M segments.

S320. The client receives the segment by using the HTTP protocol, and determines, by using a random number generator algorithm and an initial value that are the same as those of the content preparing unit, whether the segment is encrypted, where a specific determining process is the same as that of the foregoing content preparing unit, and details are not described herein again.

S330. The client performs a decryption operation on the encrypted segment, so as to restore an original unencrypted segment.

It may be learned that in a method in embodiments of the present invention, partial encryption is performed on media data, so that transmitted data combines encrypted data and unencrypted data, and a requester decrypts only an encrypted part of the several data, thereby effectively reducing a system resource overhead in a case in which media data security is ensured.

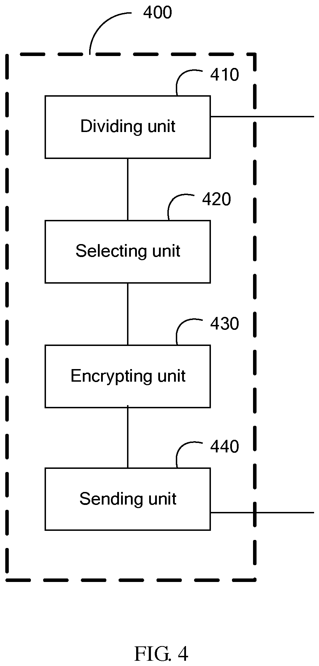

On a basis of a same idea as that in the foregoing, Embodiment 4 of the present invention further proposes an apparatus for implementing media data processing. As shown in FIG. 4, the apparatus 400 includes: a dividing unit 410, a selecting unit 420, an encrypting unit 430, and a sending unit 440.

The dividing unit 410 is configured to divide media data into several data blocks; the selecting unit 420 is configured to select, by using a preset rule, a part of the several data blocks obtained through dividing by the dividing unit 410; the encrypting unit 430 is configured to encrypt the part of the several data blocks selected by the selecting unit 420; and the sending unit 440 is configured to, when a data acquiring request from a requester is received, send the encrypted part of the several data blocks and an unencrypted data block in the several data blocks to the requester, so that the requester can determine the encrypted part of the several data blocks according to the preset rule, where the selecting unit 420 and the requester share the preset rule.

In addition, the apparatus 400 may further include (not shown in the figure): a first sharing unit, configured to send, through a secure channel, the preset rule used by the selecting unit to the requester; or configured to notify, in a public manner, the requester of the preset rule used by the selecting unit; or preset, in the selecting unit, the preset rule which is the same as that of the requester; or negotiate and determine, by exchanging information with the requester, the preset rule used by the selecting module.

The selecting unit 420 further includes (not shown in the figure): a first random number generator, a first matching module, and a first processing module, where the first random number generator is configured to generate a random variable sequence according to a random number generation algorithm included in the preset rule, and the random variable sequence includes a first variable that represents a first state and a second variable that represents a second state; the first matching module is configured to associate the first variable and the second variable in the random variable sequence with the several data blocks, where each data block in the several data blocks is corresponding to only one variable in the random variable sequence; and the first processing module is configured to: determine, according to a variable corresponding to the data block, whether the data block needs to be encrypted, and notify the encrypting unit 430.

It should be noted that the selecting unit 420 may further include (not shown in the figure): a first determining module and a first extracting module, where the first determining module is configured to determine a selection algorithm by using an algorithm identifier of the requester, where the algorithm identifier is included in the preset rule; and the first extracting module is configured to extract, from the media data, a data block that complies with the selection algorithm determined by the first determining module, and instruct the encrypting unit 430 to perform an encryption operation.

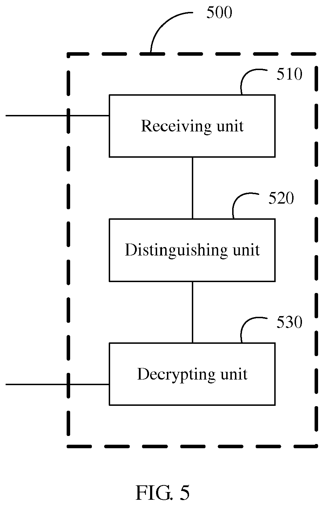

On a basis of a same idea as that in the foregoing, Embodiment 5 of the present invention further proposes an apparatus for implementing media data processing. As shown in FIG. 5, the apparatus 500 includes: a receiving unit 510, a distinguishing unit 520, and a decrypting unit 530.

The receiving unit 510 is configured to acquire media data from a sender; the distinguishing unit 520 is configured to determine, by using a preset rule shared with the sender, an encrypted data block in the media data received by the receiving unit 510; and the decrypting unit 530 is configured to perform a decryption operation on the encrypted data block determined by the distinguishing unit 520.

In addition, the apparatus 500 may further include (not shown in the figure): a second sharing unit, configured to receive, through a secure channel, the preset rule sent by the sender and used by the distinguishing unit 520; or acquire, in a public manner, the preset rule notified by the sender and used by the distinguishing unit 520; or preset, in the distinguishing unit 520, the preset rule which is the same as that of the sender; or negotiate and determine, by exchanging information with the sender, the preset rule used by the distinguishing unit 520.

The distinguishing unit 520 may further include (not shown in the figure): a second random number generator, a second matching module, and a second processing module.

The second random number generator is configured to generate a random variable sequence according to a random number generation algorithm included in the preset rule, where the random variable sequence includes a first variable that represents a first state and a second variable that represents a second state; the second matching module is configured to associate the first variable and the second variable in the random variable sequence with several data blocks, where each data block in the several data blocks is corresponding to only one variable in the random variable sequence; and the second processing module is configured to: determine, according to a variable corresponding to the data block, whether the data block is an encrypted data block, and instruct the decrypting unit 530 to perform the decryption operation.

In addition, the distinguishing unit 520 may further include (not shown in the figure): a second determining module and a second extracting module, where the second determining module determines a selection algorithm according to an algorithm identifier of the encryption device; and the second extracting module is configured to: extract, from the received media data, a data block that complies with the selection algorithm determined by the second determining module, and instruct the decrypting unit 530 to perform a subsequent decryption operation.

It should be noted that a person skilled in the art easily understands that, various apparatuses for implementing media data processing described in the foregoing embodiments may also exist as a part of another system and implement, in the system, media data processing consistent with the descriptions in the foregoing embodiments; therefore, a system that includes the apparatus for implementing media data processing in the foregoing embodiments shall fall within the protection scope of the present application, and details are not described herein again.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the embodiments of the present invention.

In combination with the embodiments disclosed in this specification, method or algorithm steps may be implemented by hardware, a software module executed by a processor, or a combination thereof.

## Claims

1. A method for implementing media data processing, comprising:
dividing (110) media data into several data blocks;
selecting (120) a part of the several data blocks by using a preset rule;
encrypting (120) the selected part of the several data blocks; and
when a data acquiring request from a requester is received, sending (120) requested data to the requester, wherein the requested data comprises: the encrypted part of the several data blocks, or an unencrypted data block in the several data blocks, or the unencrypted data block in the several data blocks and the encrypted part of the several data blocks; sharing the preset rule and a seed with the requester, so that the requester can
determine the encrypted part of the several data blocks according to the preset rule;
the method being **characterized in that**:
wherein the preset rule at least comprises a random number generation algorithm, and the selecting a part of the several data blocks by using a preset rule comprises:
generating a random variable sequence according to the random number generation algorithm, wherein the random variable sequence comprises a first variable that represents a first state and a second variable that represents a second state; and
the first variable and the second variable in the random variable sequence are associated with the several data blocks, wherein each data block in the several data blocks is corresponding to only one first variable or second variable in the random variable sequence, and the first variable and the second variable are used to distinguish whether the data block needs to be encrypted.

2. The method according to claim 1, wherein the sharing the preset rule with the requester comprises:
sending the preset rule to the requester through a secure channel; or
notifying the requester of the preset rule in a public manner; or
presetting the preset rule which is the same as that of the requester; or
negotiating and determining the preset rule by exchanging information with the requester.

3. The method according to claim 1, wherein the preset rule comprises multiple selection algorithms and algorithm identifiers, and the selecting a part of the several data blocks by using a preset rule comprises:
determining a selection algorithm by using an algorithm identifier of the requester; and
extracting, from the media data, a data block that complies with the selection algorithm to perform a subsequent encryption operation.

4. A method for implementing media data processing, comprising:
receiving (130) media data processed by an encryption device;
determining (130) an encrypted data block in the media data by using a preset rule and a seed shared with the encryption device; and
performing (140) decryption processing on the encrypted data block to obtain original media data;
the method being **characterized in that**:
wherein the preset rule at least comprises a random number generation algorithm, and the determining an encrypted data block in the media data by using the preset rule comprises:
generating a random variable sequence according to the random number generation algorithm, wherein the random variable sequence comprises a first variable that represents a first state and a second variable that represents a second state; and
the first variable and the second variable in the random variable sequence are associated with the several data blocks, wherein each data block in the several data blocks is corresponding to only one first variable or second variable in the random variable sequence, and the first variable and the second variable are used to distinguish whether the data block is an encrypted data block.

5. The method according to claim 4, wherein presetting the rule shared with the encryption device comprises:
receiving, through a secure channel, the preset rule sent by the encryption device; or
acquiring, in a public manner, the preset rule notified by the decryption device; or
presetting the preset rule which is the same as that of the encryption device; or
negotiating and determining the preset rule by exchanging information with the encryption device.

6. The method according to claim 4, wherein when the preset rule comprises multiple selection algorithms and algorithm identifiers, the determining an encrypted data block in the media data by using the preset rule comprises:
determining the selection algorithm by using an algorithm identifier of the encryption device; and
extracting, from the received media data, a data block that complies with the selection algorithm to perform a subsequent decryption operation.

7. An apparatus for implementing media data processing, comprising: a dividing unit (410), a selecting unit (420), an encrypting unit (430), and a sending unit (440), wherein:
the dividing unit (410) is configured to divide media data into several data blocks;
the selecting unit (420) is configured to select, by using a preset rule and a seed, a part of the several data blocks obtained through dividing by the dividing unit;
the encrypting unit (430) is configured to encrypt the part of the several data blocks selected by the selecting unit; and
the sending unit (440) is configured to, when a data acquiring request from a requester is received, send the encrypted part of the several data blocks and an unencrypted data block in the several data blocks to the requester, so that the requester can determine the encrypted part of the several data blocks according to the preset rule, wherein
the selecting unit (420) and the requester share the preset rule;
the apparatus being **characterized in that**:
wherein the selecting unit (420) further comprises: a first random number generator, a first matching module, and a first processing module; wherein:
the first random number generator is configured to generate a random variable sequence according to a random number generation algorithm comprised in the preset rule, wherein the random variable sequence comprises a first variable that represents a first state and a second variable that represents a second state;
the first matching module is configured to associate the first variable and the second variable in the random variable sequence with the several data blocks, wherein each data block in the several data blocks is corresponding to only one first variable or second variable in the random variable sequence; and
the first processing module is configured to: determine, according to a variable corresponding to the data block, whether the data block needs to be encrypted, and notify the encrypting unit.

8. The apparatus according to claim 7, wherein the apparatus further comprises:
a first sharing unit, configured to send, through a secure channel, the preset rule used by the selecting unit to the requester; or configured to notify, in a public manner, the requester of the preset rule used by the selecting unit; or preset, in the selecting unit, the preset rule which is the same as that of the requester; or negotiate and determine, by exchanging information with the requester, the preset rule used by the selecting unit.

9. The apparatus according to claim 7, wherein the selecting unit (420) further comprises: a first determining module and a first extracting module, wherein:
the first determining module is configured to determine a selection algorithm by using an algorithm identifier of the requester, wherein the algorithm identifier is comprised in the preset rule; and
the first extracting module is configured to: extract, from the media data, a data block that complies with the selection algorithm determined by the first determining module, and instruct the encrypting unit to perform an encryption operation.

10. An apparatus for implementing media data processing, comprising: a receiving unit (510), a distinguishing unit (520), and a decrypting unit (530), wherein:
the receiving unit (510) is configured to receive media data processed by an encryption device;
the distinguishing unit (520) is configured to determine, by using a preset rule and a seed shared with the encryption device, an encrypted data block in the media data received by the receiving unit; and
the decrypting unit (530) is configured to perform a decryption operation on the encrypted data block determined by the distinguishing unit;
the apparatus being **characterized in that**:
wherein the distinguishing unit (520) further comprises: a second random number generator, a second matching module, and a second processing module, wherein:
the second random number generator is configured to generate a random variable sequence according to a random number generation algorithm comprised in the preset rule, wherein the random variable sequence comprises a first variable that represents a first state and a second variable that represents a second state;
the second matching module is configured to associate the first variable and the second variable in the random variable sequence with the several data blocks, wherein each data block in the several data blocks is corresponding to only one first variable or second variable in the random variable sequence; and
the second processing module is configured to: determine, according to a variable corresponding to the data block, whether the data block is an encrypted data block, and instruct the decrypting unit to perform the decryption operation.

11. The apparatus according to claim 10, wherein the apparatus further comprises:
a second sharing unit, configured to receive, through a secure channel, the preset rule sent by the encryption device and used by the distinguishing unit; or acquire, in a public manner, the preset rule notified by the encryption device and used by the distinguishing unit; or preset, in the distinguishing unit, the preset rule which is the same as that of the encryption device; or negotiate and determine, by exchanging information with the encryption device, the preset rule used by the distinguishing unit.

12. The apparatus according to claim 11, wherein the distinguishing unit (520) further comprises: a second determining module and a second extracting module, wherein:
the second determining module is configured to determine a selection algorithm by using an algorithm identifier of the encryption device, wherein the algorithm identifier is comprised in the preset rule; and
the second extracting module is configured to: extract, from the received media data, a data block that complies with the selection algorithm determined by the second determining module, and instruct the decrypting unit to perform a subsequent decryption operation.

13. A system for implementing media data processing, comprising: a first processing device and a second processing device, wherein:
the first processing device is configured to: divide media data into several data blocks, select a part of the several data blocks by using a preset rule and a seed shared with the second processing device, and encrypt the part of the several data blocks; and
the second processing device is configured to: receive media data processed by an encryption device, and after an encrypted data block in the media data is determined by using the preset rule shared with the first processing device, perform decryption processing on the encrypted data block to obtain original media data;
the system being **characterized in that**:
wherein the preset rule at least comprises a random number generation algorithm, and the first processing device is further configured to generate a random variable sequence according to a random number generation algorithm comprised in the preset rule, wherein the random variable sequence comprises a first variable that represents a first state and a second variable that represents a second state;
associate the first variable and the second variable in the random variable sequence with the several data blocks, wherein each data block in the several data blocks is corresponding to only one first variable or second variable in the random variable sequence; and
determine, according to a variable corresponding to the data block, whether the data block needs to be encrypted, and notify the first processing device.

## Patentansprüche

1. Verfahren zur Implementierung von Mediendatenverarbeitung, umfassend:
Aufteilen (110) von Mediendaten in mehrere Datenblöcke;
Auswählen (120) eines Teils der mehreren Datenblöcke unter Verwendung einer voreingestellten Regel;
Verschlüsseln (120) des ausgewählten Teils der mehreren Datenblöcke; und
wenn eine Datenerfassungsanforderung von einem Anforderer empfangen wird, Senden (120) der angeforderten Daten an den Anforderer, wobei die angeforderten Daten umfassen: den verschlüsselten Teil der mehreren Datenblöcke, oder einen unverschlüsselten Datenblock in den mehreren Datenblöcken, oder den unverschlüsselten Datenblock in den mehreren Datenblöcken und den verschlüsselten Teil der mehreren Datenblöcke; gemeinsames Nutzen der voreingestellten Regel und eines Startwerts mit dem Anforderer, sodass der Anforderer den verschlüsselten Teil der mehreren Datenblöcke gemäß der voreingestellten Regel bestimmen kann;
wobei das Verfahren sich **dadurch kennzeichnet, dass**:
wobei die voreingestellte Regel mindestens einen Zufallszahlengenerierungsalgorithmus umfasst und das Auswählen eines Teils der mehreren Datenblöcke unter Verwendung einer voreingestellten Regel umfasst:
Erzeugen einer Sequenz von Zufallsvariablen gemäß dem Zufallszahlengenerierungsalgorithmus, wobei die Sequenz von Zufallsvariablen eine erste Variable, die einen ersten Zustand darstellt, und eine zweite Variable, die einen zweiten Zustand darstellt, umfasst; und
die erste Variable und die zweite Variable in der Sequenz von Zufallsvariablen den mehreren Datenblöcken zugeordnet sind, wobei jeder Datenblock in den mehreren Datenblöcken nur einer ersten Variablen oder zweiten Variablen in der Sequenz von Zufallsvariablen entspricht und die erste Variable und die zweite Variable zur Unterscheidung verwendet werden, ob der Datenblock verschlüsselt werden muss.

2. Verfahren nach Anspruch 1, wobei das gemeinsame Nutzen der voreingestellten Regel mit dem Anforderer umfasst:
Senden der voreingestellten Regel an den Anforderer über einen sicheren Kanal; oder
Benachrichtigen des Anforderers über die voreingestellte Regel auf öffentliche Weise; oder
Voreinstellen der voreingestellten Regel, die dieselbe ist wie die des Anforderers; oder
Verhandeln und Bestimmen der voreingestellten Regel durch Austauschen einer Information mit dem Anforderer.

3. Verfahren nach Anspruch 1, wobei die voreingestellte Regel verschiedene Auswahlalgorithmen und Algorithmuskennungen umfasst und das Auswählen eines Teils der mehreren Datenblöcke unter Verwendung einer voreingestellten Regel umfasst:
Bestimmen eines Auswahlalgorithmus unter Verwendung einer Algorithmuskennung des Anforderers; und
Extrahieren, aus den Mediendaten, eines Datenblocks, der im Einklang mit dem Auswahlalgorithmus steht, um eine nachfolgende Verschlüsselungsoperation durchzuführen.

4. Verfahren zur Implementierung von Mediendatenverarbeitung, umfassend:
Empfangen (130) von Mediendaten, die von einer Verschlüsselungsvorrichtung verarbeitet wurden;
Bestimmen (130) eines verschlüsselten Datenblocks in den Mediendaten unter Verwendung einer voreingestellten Regel und eines mit der Verschlüsselungsvorrichtung gemeinsam genutzten Startwerts; und
Durchführen (140) von Entschlüsselungsverarbeitung an dem verschlüsselten Datenblock, um die ursprünglichen Mediendaten zu erhalten;
wobei das Verfahren sich **dadurch kennzeichnet, dass**:
wobei die voreingestellte Regel mindestens einen Zufallszahlengenerierungsalgorithmus umfasst und das Bestimmen eines verschlüsselten Datenblocks in den Mediendaten unter Verwendung der voreingestellten Regel umfasst:
Erzeugen einer Sequenz von Zufallsvariablen gemäß dem Zufallszahlengenerierungsalgorithmus, wobei die Sequenz von Zufallsvariablen eine erste Variable, die einen ersten Zustand darstellt, und eine zweite Variable, die einen zweiten Zustand darstellt, umfasst; und
die erste Variable und die zweite Variable in der Sequenz von Zufallsvariablen den mehreren Datenblöcken zugeordnet sind, wobei jeder Datenblock in den mehreren Datenblöcken nur einer ersten Variablen oder zweiten Variablen in der Sequenz von Zufallsvariablen entspricht und die erste Variable und die zweite Variable zur Unterscheidung verwendet werden, ob der Datenblock ein verschlüsselter Datenblock ist.

5. Verfahren nach Anspruch 4, wobei das Voreinstellen der Regel, die mit der Verschlüsselungsvorrichtung gemeinsam genutzt wird, umfasst:
Empfangen, über einen sicheren Kanal, der von der Verschlüsselungsvorrichtung gesendeten voreingestellten Regel; oder
Erfassen, in einer öffentlichen Weise, der von der Entschlüsselungsvorrichtung mitgeteilten voreingestellten Regel; oder
Voreinstellen der voreingestellten Regel, die dieselbe ist wie die der Verschlüsselungsvorrichtung; oder
Verhandeln und Bestimmen der voreingestellten Regel durch Austauschen einer Information mit der Verschlüsselungsvorrichtung.

6. Verfahren nach Anspruch 4, wobei, wenn die voreingestellte Regel verschiedene Auswahlalgorithmen und Algorithmuskennungen umfasst, das Bestimmen eines verschlüsselten Datenblocks in den Mediendaten unter Verwendung der voreingestellten Regel umfasst:
Bestimmen des Auswahlalgorithmus unter Verwendung einer Algorithmuskennung der Verschlüsselungsvorrichtung; und
Extrahieren, aus den empfangenen Mediendaten, eines Datenblocks, der im Einklang mit dem Auswahlalgorithmus steht, um eine nachfolgende Entschlüsselungsoperation durchzuführen.

7. Vorrichtung zur Implementierung von Mediendatenverarbeitung, umfassend: eine Aufteilungseinheit (410), eine Auswahleinheit (420), eine Verschlüsselungseinheit (430) und eine Sendeeinheit (440), wobei:
die Aufteilungseinheit (410) konfiguriert ist, um die Mediendaten in mehrere Datenblöcke zu unterteilen;
die Auswahleinheit (420) konfiguriert ist, um, unter Verwendung einer voreingestellten Regel und eines Startwerts, einen Teil der mehreren Datenblöcke auszuwählen, die durch das Aufteilen durch die Aufteilungseinheit erhalten werden;
die Verschlüsselungseinheit (430) konfiguriert ist, um den Teil der mehreren Datenblöcke zu verschlüsseln, die von der Auswahleinheit ausgewählt werden; und
die Sendeeinheit (440) konfiguriert ist, um, wenn eine Datenerfassungsanforderung von einem Anforderer empfangen wird, den verschlüsselten Teil der mehreren Datenblöcke und einen unverschlüsselten Datenblock in den mehreren Datenblöcken an den Anforderer zu senden, sodass der Anforderer den verschlüsselten Teil der mehreren Datenblöcke gemäß der voreingestellten Regel bestimmen kann, wobei die Auswahleinheit (420) und der Anforderer die voreingestellte Regel gemeinsam nutzen;
wobei die Vorrichtung sich **dadurch kennzeichnet, dass**:
wobei die Auswahleinheit (420) ferner umfasst: einen ersten Zufallszahlengenerator, ein erstes Abgleichmodul und ein erstes Verarbeitungsmodul; wobei:
der erste Zufallszahlengenerator konfiguriert ist, um eine Sequenz von Zufallsvariablen gemäß einem in der voreingestellten Regel enthaltenen Zufallszahlengenerierungsalgorithmus zu erzeugen, wobei die Sequenz von Zufallsvariablen eine erste Variable, die einen ersten Zustand darstellt, und eine zweite Variable, die einen zweiten Zustand darstellt, umfasst;
das erste Abgleichmodul konfiguriert ist, um die erste Variable und die zweite Variable in der Sequenz von Zufallsvariablen den mehreren Datenblöcken zuzuordnen, wobei jeder Datenblock in den mehreren Datenblöcken nur einer ersten Variablen oder zweiten Variablen in der Sequenz von Zufallsvariablen entspricht; und
das erste Verarbeitungsmodul konfiguriert ist, um: gemäß einer dem Datenblock entsprechenden Variablen zu bestimmen, ob der Datenblock verschlüsselt werden muss, und die Verschlüsselungseinheit zu benachrichtigen.

8. Vorrichtung nach Anspruch 7, wobei die Vorrichtung ferner umfasst:
eine erste gemeinsame Nutzungseinheit, die konfiguriert ist, um, über einen sicheren Kanal, die von der Auswahleinheit verwendete voreingestellte Regel an den Anforderer zu senden; oder konfiguriert ist, um den Anforderer, in einer öffentlichen Weise, über die von der Auswahleinheit verwendete voreingestellte Regel zu benachrichtigen; oder, in der Auswahleinheit, die voreingestellte Regel voreinzustellen, die dieselbe ist wie die des Anforderers; oder, durch Austauschen von Informationen mit dem Anforderer, die von der Auswahleinheit verwendete voreingestellte Regel zu verhandeln und zu bestimmen.

9. Vorrichtung nach Anspruch 7, wobei die Auswahleinheit (420) ferner umfasst: ein erstes Bestimmungsmodul und ein erstes Extraktionsmodul, wobei:
das erste Bestimmungsmodul konfiguriert ist, um einen Auswahlalgorithmus unter Verwendung einer Algorithmuskennung des Anforderers zu bestimmen, wobei die Algorithmuskennung in der voreingestellten Regel enthalten ist; und
das erste Extraktionsmodul konfiguriert ist, um: aus den Mediendaten einen Datenblock zu extrahieren, der im Einklang mit dem durch das erste Bestimmungsmodul bestimmten Auswahlalgorithmus steht, und die Verschlüsselungseinheit anzuweisen, eine Verschlüsselungsoperation durchzuführen.

10. Vorrichtung zur Implementierung von Mediendatenverarbeitung, umfassend: eine Empfangseinheit (510), eine Unterscheidungseinheit (520) und eine Entschlüsselungseinheit (530), wobei:
die Empfangseinheit (510) konfiguriert ist, um Mediendaten zu empfangen, die von einer Verschlüsselungsvorrichtung verarbeitet wurden;
die Unterscheidungseinheit (520) konfiguriert ist, um, unter Verwendung einer voreingestellten Regel und eines mit der Verschlüsselungsvorrichtung gemeinsam genutzten Startwerts, einen verschlüsselten Datenblock in den von der Empfangseinheit empfangenen Mediendaten zu bestimmen; und
die Entschlüsselungseinheit (530) konfiguriert ist, um eine Entschlüsselungsoperation an dem durch die Unterscheidungseinheit bestimmten verschlüsselten Datenblock durchzuführen;
wobei die Vorrichtung sich **dadurch kennzeichnet, dass**:
wobei die Unterscheidungseinheit (520) ferner umfasst: einen zweiten Zufallszahlengenerator, ein zweites Abgleichmodul und ein zweites Verarbeitungsmodul, wobei:
der zweite Zufallszahlengenerator konfiguriert ist, um eine Sequenz von Zufallsvariablen gemäß einem in der voreingestellten Regel enthaltenen Zufallszahlengenerierungsalgorithmus zu erzeugen, wobei die Sequenz von Zufallsvariablen eine erste Variable, die einen ersten Zustand darstellt, und eine zweite Variable, die einen zweiten Zustand darstellt, umfasst;
das zweite Abgleichmodul konfiguriert ist, um die erste Variable und die zweite Variable in der Sequenz von Zufallsvariablen den mehreren Datenblöcken zuzuordnen, wobei jeder Datenblock in den mehreren Datenblöcken nur einer ersten Variablen oder zweiten Variablen in der Sequenz von Zufallsvariablen entspricht; und
das zweite Verarbeitungsmodul konfiguriert ist, um: gemäß einer dem Datenblock entsprechenden Variablen zu bestimmen, ob der Datenblock ein verschlüsselter Datenblock ist, und die Entschlüsselungseinheit anzuweisen, die Entschlüsselungsoperation durchzuführen.

11. Vorrichtung nach Anspruch 10, wobei die Vorrichtung ferner umfasst:
eine zweite gemeinsame Nutzungseinheit, die konfiguriert ist, um, über einen sicheren Kanal, die voreingestellte Regel zu empfangen, die von der Verschlüsselungsvorrichtung gesendet und von der Unterscheidungseinheit verwendet wird; oder, in einer öffentlichen Weise, die voreingestellte Regel zu erfassen, die von der Verschlüsselungsvorrichtung mitgeteilt und von der Unterscheidungseinheit verwendet wird; oder, in der Unterscheidungseinheit, die voreingestellte Regel voreinzustellen, die dieselbe ist wie die der Verschlüsselungsvorrichtung; oder, durch Austauschen von Informationen mit der Verschlüsselungsvorrichtung, die von der Unterscheidungseinheit verwendete voreingestellte Regel zu verhandeln und zu bestimmen.

12. Vorrichtung nach Anspruch 11, wobei die Unterscheidungseinheit (520) ferner umfasst: ein zweites Bestimmungsmodul und ein zweites Extraktionsmodul, wobei:
das zweite Bestimmungsmodul konfiguriert ist, um einen Auswahlalgorithmus unter Verwendung einer Algorithmuskennung der Verschlüsselungsvorrichtung zu bestimmen, wobei die Algorithmuskennung in der voreingestellten Regel enthalten ist; und
das zweite Extraktionsmodul konfiguriert ist, um: aus den empfangenen Mediendaten einen Datenblock zu extrahieren, der im Einklang mit dem durch das zweite Bestimmungsmodul bestimmten Auswahlalgorithmus steht, und die Entschlüsselungseinheit anzuweisen, eine nachfolgende Entschlüsselungsoperation durchzuführen.

13. System zur Implementierung von Mediendatenverarbeitung, umfassend: eine erste Verarbeitungsvorrichtung und eine zweite Verarbeitungsvorrichtung, wobei:
die erste Verarbeitungsvorrichtung konfiguriert ist, um: die Mediendaten in mehrere Datenblöcke zu unterteilen, einen Teil der mehreren Datenblöcke unter Verwendung einer voreingestellten Regel und eines mit der zweiten Verarbeitungsvorrichtung gemeinsam genutzten Startwerts auszuwählen und den Teil der mehreren Datenblöcke zu verschlüsseln; und
die zweite Verarbeitungsvorrichtung konfiguriert ist, um: von einer Verschlüsselungsvorrichtung verarbeitete Mediendaten zu empfangen, und, nachdem ein verschlüsselter Datenblock in den Mediendaten unter Verwendung der voreingestellten Regel, die mit der ersten Verarbeitungsvorrichtung gemeinsam genutzt wird, bestimmt wird, die Entschlüsselungsverarbeitung an dem verschlüsselten Datenblock durchzuführen, um die ursprünglichen Mediendaten zu erhalten;
wobei das System sich **dadurch kennzeichnet, dass**:
wobei die voreingestellte Regel mindestens einen Zufallszahlengenerierungsalgorithmus umfasst, und die erste Verarbeitungsvorrichtung ferner konfiguriert ist, um eine Sequenz von Zufallsvariablen gemäß einem in der voreingestellten Regel enthaltenen Zufallszahlengenerierungsalgorithmus zu erzeugen, wobei die Sequenz von Zufallsvariablen eine erste Variable, die einen ersten Zustand darstellt, und eine zweite Variable, die einen zweiten Zustand darstellt, umfasst;
die erste Variable und die zweite Variable in der Sequenz von Zufallsvariablen den mehreren Datenblöcken zuzuordnen, wobei jeder Datenblock in den mehreren Datenblöcken nur einer ersten Variablen oder zweiten Variablen in der Sequenz von Zufallsvariablen entspricht; und
gemäß einer dem Datenblock entsprechenden Variablen zu bestimmen, ob der Datenblock verschlüsselt werden muss, und die erste Verarbeitungsvorrichtung zu benachrichtigen.

## Revendications

1. Procédé de mise en d'un traitement de données multimédia, comprenant :
la division (110) de données multimédia en plusieurs blocs de données ;
la sélection (120) d'une partie des plusieurs blocs de données en utilisant une règle préétablie ;
le cryptage (120) de la partie sélectionnée des plusieurs blocs de données ; et
quand une demande d'acquisition de données provenant d'un demandeur est reçue, l'envoi (120) des données demandées au demandeur, dans lequel les données demandées comprennent : la partie cryptée des plusieurs blocs de données, ou un bloc de données non crypté dans les plusieurs blocs de données, ou le bloc de données non crypté dans les plusieurs blocs de données et la partie cryptée des plusieurs blocs de données ; le partage de la règle préétablie et d'une valeur germe avec le demandeur, de telle sorte que le demandeur puisse déterminer la partie cryptée des plusieurs blocs de données conformément à la règle préétablie ;
le procédé étant **caractérisé en ce que** :
la règle préétablie comprend au moins un algorithme de génération de nombres aléatoires, et la partie de sélection des plusieurs blocs de données en utilisant une règle préétablie comprend :
la génération d'une séquence de variables aléatoires conformément à l'algorithme de génération de nombres aléatoires, dans lequel la séquence de variables aléatoires comprend une première variable qui représente un premier état et une seconde variable qui représente un second état ; et
la première variable et la seconde variable dans la séquence de variables aléatoires sont associées aux plusieurs blocs de données, dans lequel chaque bloc de données dans les plusieurs blocs de données correspond à une seule première variable ou une seule seconde variable dans la séquence de variables aléatoires, et la première variable et la seconde variable servent à juger que le bloc de données doit être crypté ou non.

2. Procédé selon la revendication 1, dans lequel le partage de la règle préétablie avec le demandeur comprend :
l'envoi de la règle préétablie au demandeur par un canal sécurisé ; ou
la notification au demandeur de la règle préétablie de manière publique; ou
le préétablissement de la règle préétablie pour qu'elle soit identique à celle du demandeur ; ou
la négociation et la détermination de la règle préétablie en échangeant des informations avec le demandeur.

3. Procédé selon la revendication 1, dans lequel la règle préétablie comprend de multiples algorithmes de sélection et identifiants d'algorithmes, et la partie de sélection des plusieurs blocs de données en utilisant une règle préétablie comprend :
la détermination d'un algorithme de sélection à l'aide d'un identifiant d'algorithme du demandeur ; et
l'extraction, à partir des données multimédia, d'un bloc de données qui est conforme à l'algorithme de sélection pour exécuter une opération de cryptage ultérieure.

4. Procédé de mise en oeuvre d'un traitement de données multimédia, comprenant : la réception (130) de données multimédia traitées par un dispositif de cryptage ;
la détermination (130) d'un bloc de données crypté dans les données multimédia en utilisant une règle préétablie et une valeur germe partagées avec le dispositif de cryptage ; et
l'exécution (140) d'un traitement de décryptage sur le bloc de données crypté pour obtenir des données multimédia d'origine ;
le procédé étant **caractérisé en ce que** :
la règle préétablie comprend au moins un algorithme de génération de nombres aléatoires, et la détermination d'un bloc de données crypté dans les données multimédia en utilisant la règle préétablie comprend :
la génération d'une séquence de variables aléatoires conformément à l'algorithme de génération de nombres aléatoires, dans lequel la séquence de variables aléatoires comprend une première variable qui représente un premier état et une seconde variable qui représente un second état ; et
la première variable et la seconde variable dans la séquence de variables aléatoires sont associées aux plusieurs blocs de données, dans lequel chaque bloc de données dans les plusieurs blocs de données correspond à une seule première variable ou une seule seconde variable dans la séquence de variables aléatoires, et la première variable et la seconde variable servent à juger que le bloc de données est ou non un bloc de données crypté.

5. Procédé selon la revendication 4, dans lequel le préétablissement de la règle partagée avec le dispositif de cryptage comprend :
la réception, par un canal sécurisé, de la règle préétablie envoyée par le dispositif de cryptage ; ou
l'acquisition, d'une manière publique, de la règle préétablie notifiée par le dispositif de décryptage ;
ou
le préétablissement de la règle préétablie pour qu'elle soit identique à celle du dispositif de cryptage ; ou
la négociation et la détermination de la règle préétablie en échangeant des informations avec le dispositif de cryptage.

6. Procédé selon la revendication 4, dans lequel quand la règle préétablie comprend de multiples algorithmes de sélection et identifiants d'algorithmes, la détermination d'un bloc de données crypté dans les données multimédia en utilisant la règle préétablie comprend :
la détermination de l'algorithme de sélection en utilisant un identifiant d'algorithme du dispositif de cryptage ; et
l'extraction, à partir des données multimédia reçues, d'un bloc de données qui est conforme à l'algorithme de sélection pour effectuer une opération de décryptage ultérieure.

7. Appareil de mise en oeuvre d'un traitement de donnée multimédia, comprenant :
une unité de division (410), une unité de sélection (420), une unité de cryptage (430), et une unité d'envoi (440), dans lequel :
l'unité de division (410) est configurée pour diviser des données multimédia en plusieurs blocs de données ;
l'unité de sélection (420) est configurée pour sélectionner, en utilisant une règle préétablie et une valeur germe, une partie des plusieurs blocs de données obtenus par division par l'unité de division ;
l'unité de cryptage (430) est configurée pour crypter la partie des plusieurs blocs de données sélectionnée par l'unité de sélection ; et
l'unité d'envoi (440) est configurée pour, quand une demande d'acquisition de données provenant d'un demandeur est reçue, envoyer la partie cryptée des plusieurs blocs de données et un bloc de données non crypté dans les plusieurs blocs de données au demandeur, de telle sorte que le demandeur puisse déterminer la partie cryptée des plusieurs blocs de données conformément à la règle préétablie ;
dans lequel l'unité de sélection (420) et le demandeur partagent la règle préétablie ; l'appareil étant **caractérisé en ce que** :
l'unité de sélection (420) comprend en outre : un premier générateur de nombres aléatoires, un premier module de concordance, et un premier module de traitement ; dans lequel :
le premier générateur de nombres aléatoires est configuré pour générer une séquence de variables aléatoires conformément à un algorithme de génération de nombres aléatoires compris dans la règle préétablie, dans lequel la séquence de variables aléatoires comprend une première variable qui représente un premier état et une seconde variable qui représente un second état ;
le premier module de concordance est configuré pour associer la première variable et la seconde variable dans la séquence de variables aléatoires aux plusieurs blocs de données, dans lequel chaque bloc de données dans les plusieurs blocs de données correspond à une seule première variable ou une seule seconde variable dans la séquence de variables aléatoires ; et
le premier module de traitement est configuré pour : déterminer, conformément à une variable correspondant au bloc de données, que le bloc de données doit être crypté ou non, et notifier l'unité de cryptage.

8. Appareil selon la revendication 7, l'appareil comprenant en outre :
une première unité de partage, configurée pour envoyer au demandeur, par un canal sécurisé, la règle préétablie utilisée par l'unité de sélection; ou configurée pour notifier, d'une manière publique, au demandeur la règle préétablie utilisée par l'unité de sélection ; ou préétablir, dans l'unité de sélection, la règle préétablie pour qu'elle soit identique à celle du demandeur ; ou négocier et déterminer, par échange d'informations avec le demandeur, la règle préétablie utilisée par l'unité de sélection.

9. Appareil selon la revendication 7, dans lequel l'unité de sélection (420) comprend en outre : un premier module de détermination et un premier module d'extraction, dans lequel :
le premier module de détermination est configuré pour déterminer un algorithme de sélection en utilisant un identifiant d'algorithme du demandeur, dans lequel l'identifiant d'algorithme est compris dans la règle préétablie ; et
le premier module d'extraction est configuré pour : extraire, à partir des données multimédia, un bloc de données qui est conforme à l'algorithme de sélection déterminé par le premier module de détermination, et ordonner à l'unité de cryptage d'exécuter une opération de cryptage.

10. Appareil de mise en oeuvre d'un traitement de donnée multimédia, comprenant : une unité de réception (510), une unité de jugement (520), et une unité de décryptage (530), dans lequel :
l'unité de réception (510) est configurée pour recevoir des données multimédia traitées par un dispositif de cryptage ;
l'unité de jugement (520) est configurée pour déterminer, en utilisant une règle préétablie et une valeur germe partagées avec le dispositif de cryptage, un bloc de données crypté dans les données multimédia reçues par l'unité de réception ; et l'unité de décryptage (530) est configurée pour exécuter une opération de décryptage sur le bloc de données crypté déterminé par l'unité de jugement ;
l'appareil étant **caractérisé en ce que** :
l'unité de jugement (520) comprend en outre : un second générateur de nombres aléatoires, un second module de concordance, et un second module de traitement, dans lequel :
le second générateur de nombres aléatoires est configuré pour générer une séquence de variables aléatoires conformément à un algorithme de génération de nombres aléatoires compris dans la règle préétablie, dans lequel la séquence de variables aléatoires comprend une première variable qui représente un premier état et une seconde variable qui représente un second état ;
le second module de concordance est configuré pour associer la première variable et la seconde variable dans la séquence de variables aléatoires aux plusieurs blocs de données, dans lequel chaque bloc de données dans les plusieurs blocs de données correspond à une seule première variable ou une seule seconde variable dans la séquence de variables aléatoires ; et
le second module de traitement est configuré pour : déterminer, conformément à une variable correspondant au bloc de données, que le bloc de données est ou non un bloc de données crypté, et ordonner à l'unité de décryptage d'exécuter l'opération de décryptage.

11. Appareil selon la revendication 10, l'appareil comprenant en outre :
une seconde unité de partage, configurée pour recevoir, par un canal sécurisé, la règle préétablie envoyée par le dispositif de cryptage et utilisée par l'unité de jugement ; ou
acquérir, d'une manière publique, la règle préétablie notifiée par le dispositif de décryptage et utilisée par l'unité de jugement ; ou préétablir la règle préétablie pour qu'elle soit identique à celle du dispositif de cryptage ; ou négocier et déterminer la règle préétablie en échangeant des informations avec le dispositif de cryptage, la règle préétablie étant utilisée par l'unité de jugement.

12. Appareil selon la revendication 11, dans lequel l'unité de jugement (520) comprend en outre : un second module de détermination et un second module d'extraction, dans lequel :
le second module de détermination est configuré pour déterminer un algorithme de sélection en utilisant un identifiant d'algorithme du dispositif de cryptage, dans lequel l'identifiant d'algorithme est compris dans la règle préétablie ; et
le second module d'extraction est configuré pour : extraire, à partir des données multimédia reçues, un bloc de données qui est conforme à l'algorithme de sélection déterminé par le second module de détermination, et ordonner à l'unité de décryptage d'exécuter une opération de décryptage ultérieure.

13. Système de mise en oeuvre d'un traitement de données multimédia, comprenant : un premier dispositif de traitement et un second dispositif de traitement, dans lequel :
le premier dispositif de traitement est configuré pour : diviser des données multimédia en plusieurs blocs de données, sélectionner une partie des plusieurs blocs de données en utilisant une règle préétablie et une valeur germe partagées avec le second dispositif de traitement, et crypter la partie des plusieurs blocs de données ; et
le second dispositif de traitement est configuré pour : recevoir des données multimédia traitées par un dispositif de cryptage, et après qu'un bloc de données crypté dans les données multimédia est déterminé en utilisant la règle préétablie partagée avec le premier dispositif de traitement, exécuter un traitement de décryptage sur le bloc de données crypté pour obtenir des données multimédia d'origine ;
le système étant **caractérisé en ce que** :
la règle préétablie comprend au moins un algorithme de génération de nombres aléatoires, et le premier dispositif de traitement est configuré en outre pour générer une séquence de variables aléatoires conformément à un algorithme de génération de nombres aléatoires compris dans la règle préétablie, dans lequel la séquence de variables aléatoires comprend une première variable qui représente un premier état et une seconde variable qui représente un second état ;
associer la première variable et la seconde variable dans la séquence de variables aléatoires aux plusieurs blocs de données, dans lequel chaque bloc de données dans les plusieurs blocs de données correspond à une seule première variable ou une seule seconde variable dans la séquence de variables aléatoires ; et
déterminer, conformément à une variable correspondant au bloc de données, que le bloc de données doit être crypté ou non, et notifier le premier dispositif de traitement.
